(19) Europäisches Patentamt
European Patent Office
Office européen des brevets

(11) EP 1 521 386 A2

(12) # EUROPEAN PATENT APPLICATION

(43) Date of publication:
06.04.2005 Bulletin 2005/14

(51) Int Cl.7: **H04L 1/00**, H04L 1/06

(21) Application number: 04022565.8

(22) Date of filing: 22.09.2004

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(30) Priority: 30.09.2003 KR 2003070436

(71) Applicant: Samsung Electronics Co., Ltd.
Suwon-city, Gyeonggi-do (KR)

(72) Inventors:
- Chae, Chan-Byoung
Yeongtong-gu Suwon-si Gyeonggi-do (KR)
- Yoon, Seok-Hyun
Yeongtong-gu Suwon-si Gyeonggi-do (KR)
- Cho, Young-Kwon
Yeongtong-gu Suwon-si Gyeonggi-do (KR)
- Suh, Chang-Ho
Yeongtong-gu Suwon-si Gyeonggi-do (KR)
- Ro, Jung-Min
Yeongtong-gu Suwon-si Gyeonggi-do (KR)
- Daniel, Katz Marcos
Yeongtong-gu Suwon-si Gyeonggi-do (KR)
- Jeong, Hong-Sil
Yeongtong-gu Suwon-si Gyeonggi-do (KR)

(74) Representative: Grünecker, Kinkeldey,
Stockmair & Schwanhäusser Anwaltssozietät
Maximilianstrasse 58
80538 München (DE)

(54) **Apparatus and method for controlling a transmission scheme according to channel state in a communication system**

(57) Disclosed is a transmission scheme for a transmitter according to a channel state in a communication system where the transmitter has M transmit antennas and a receiver has N receive antennas. Upon the input of data, the transmitter processes the data in a transmission scheme selected from among a plurality of transmission schemes, and transmits the processed data to the receiver. The receiver estimates the channel state of the received signal, selects a transmission scheme according to a channel state corresponding to the channel state estimation result, and feeds back to the transmitter transmission scheme information indicating the selected transmission scheme. The transmitter determines the transmission scheme corresponding to the received transmission scheme information.

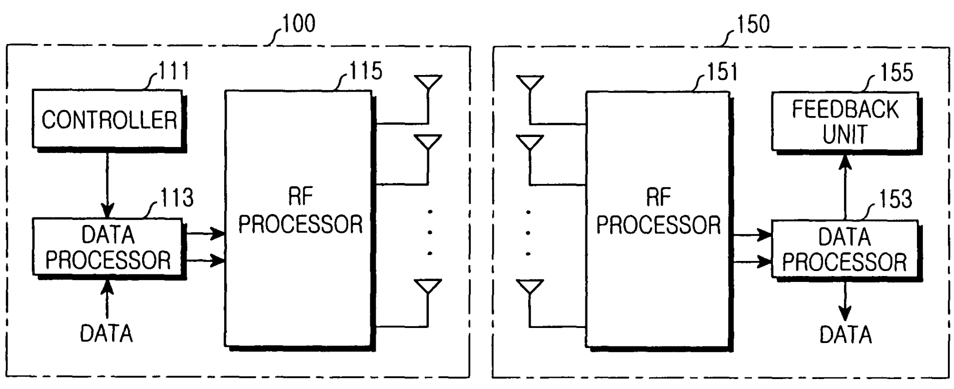


FIG.1

EP 1 521 386 A2

## Description

## BACKGROUND OF THE INVENTION

### 1. Field of the Invention

The present invention relates generally to a communication system, and in particular, to an apparatus and method for controlling a transmission scheme of a transmitter according to a channel state in a communication system having a transmitter with a plurality of transmission(Tx) antennas and a receiver with a plurality of reception(Rx) antennas.

### 2. Description of the Related Art

The modem society has witnessed the rapid development of wireless mobile communication systems in order to meeting various user demands. Much research has been conducted to provide the best service at a full rate with the least BER (Bit Error Rate) utilizing limited radio resources in the wireless mobile communication systems. One scheme to accomplish these results is space-time processing scheme.

The space-time processing scheme was intended to solve problems encountered in a radio environment, such as signal loss and an unpredictable channel state. In the 1960's, a beamforming algorithm was proposed. It is still being actively exploited to increase the effective antenna gains on the downlink and uplink channels and to increase cell capacity. STC (Space-Time Coding) scheme introduced by Tarokh, et. al. in 1997 is also a Tx diversity scheme currently under active study. The STC scheme is branched into STBC (Space Time Block Code) and STTC (Space Time Trellis Code) in the research efforts. Alamouti's code was proposed as an STBC that maintains orthogonality and offers a full rate. Many studies are also being conducted on combinations of the transmit diversity scheme and the channel coding scheme to increase the reception performance.

All these efforts target the reception performance. Efforts are also being made toward increasing the data rate rather than the reception performance. A major scheme of increasing the data rate is spatial multiplexing scheme. The spatial multiplexing scheme is a scheme to transmit different data through a plurality of Tx antennas. Herein, data of each of Tx antenna is different one another. According to the theory of Telta, et. al., MIMO (Multiple Input Multiple Output) scheme, a case of the spatial multiplexing schem, increases the capacity by as much as the number of Tx antennas, compared to SISO (Single Input Single Output) scheme. The capacity increase is very significant to high-speed data transmission systems.

By using spatial multiplexing schem and MIMO schem together, a receiver decodes a plurality of received symbols by maximum likelihood detection scheme. For a high frequency efficiency, complexity is drastically increased. Thus, BLAST (Belllab Layered Space Time) was proposed to reduce the complexity, albeit, it does not offer the best decoding performance of the maximum likelihood detection. In BLAST, symbols are separately received on a one by one basis and the separated symbols are excluded from non-separated symbols, that is, a symbol group, thereby reducing the computation volume.

Given the number of Tx antennas and the number of Rx antennas, antenna combinations can be created that correspond to the number of Tx and Rx antennas. The antenna combinations are used for different purposes. For example, for two Tx antennas and two Rx antennas, the resulting antenna combinations are 2x2 STBC and 2-layered spatial multiplexing (SM). STBC is a scheme using an STBC code. The 2x2 STBC presets the amount of data that a transmitter can transmit and improves the reception performance of a receiver. On the other hand, the 2-layered SM increases the amount of the transmission data by two, compared to the 2x2 STBC.

As described above, various antenna combinations are available based on the number of Tx antennas and the number of Rx antennas. Therefore, the selection of an antenna combination from among the various antenna combinations for data transmission/reception in a communication system is a significant factor that determines system capacity.

## SUMMARY OF THE INVENTION

An object of the present invention is to substantially solve at least the above problems and/or disadvantages and to provide at least the advantages below. Accordingly, an object of the present invention is to provide an apparatus and method for controlling of a transmitter according to a channel state in a MIMO communication system.

The above object is achieved by providing a method and apparatus for controlling a transmitter according to a channel state in a communication system.

According to one aspect of the present invention, there is provided a method for controlling a transmission scheme of a transmitter according to a channel state in a communication system where the transmitter has M transmit

antennas and a receiver has N receive antennas. The method comprises the steps of: processing data in a transmission scheme selected from among a plurality of transmission schemes, and transmitting the processed data to the receiver by the transmitter; receiving the data from the transmitter, estimating the channel state, selecting a transmission scheme according to the channel state corresponding to the channel state estimation result, and feeding back to the transmitter transmission scheme information indicating the selected transmission scheme by the receiver; and determining the transmission scheme corresponding to the received transmission scheme information by the transmitter.

According to another aspect of the present invention, there is provided with a method for controlling a transmission scheme of a transmitter according to a channel state in a communication system where the transmitter has M transmit antennas and a receiver has N receive antennas. The method comprises the steps of: processing data in a transmission scheme selected from among a plurality of transmission schemes, and transmitting the processed data to the receiver by the transmitter; receiving the data from the transmitter, estimating the channel state , and feeding back to the transmitter channel state information corresponding to the channel state estimation result by the receiver, and selecting one of the plurality of the transmission schemes corresponding to the received channel state information by the transmitter.

According to a further aspect of the present invention, there is provided an apparatus for controlling a transmission scheme of a transmitter according to a channel state in a communication system where the transmitter has M transmit antennas and a receiver has N receive antennas. The apparatus comprises the transmitter for processing data in a transmission scheme selected from among a plurality of transmission schemes, transmitting the processed data to the receiver, and determining a transmission scheme corresponding to the transmission scheme information received from the receiver; and the receiver for receiving the signal from the transmitter, estimating the channel of the signal, selecting a transmission scheme according to the estimated channel state corresponding to the channel state estimation result, and feeding back to the transmitter the transmission scheme information indicating the selected transmission scheme.

According to still another aspect of the present invention, there is provided an apparatus for controlling a transmission scheme of a transmitter according to a channel state in a communication system where the transmitter has M transmit antennas and a receiver has N receive antennas. The apparatus comprises the transmitter for processing data a transmission scheme selected from among a plurality of transmission schemes, transmitting the processed data to a receiver, and selecting one of the plurality of transmission schemes corresponding to the channel state information received from the receiver; and the receiver for receiving the data from the transmitter, estimating the channel state, and feeding back to the transmitter the channel state information corresponding to the channel state estimation result.

According to one aspect of the present invention, there is provided a method of controlling a transmission scheme of a transmitter according to a channel state in a transmitter in a communication system. The method comprises the steps of processing data in a transmission scheme selected from among a plurality of transmission schemes, and transmitting the processed data to a receiver; receiving from the receiver transmission scheme information indicating a transmission scheme determined according to the channel state between the transmitter and the receiver; and determining the transmission scheme corresponding to the received transmission scheme information.

According to another aspect of the present invention, there is provided a method of controlling a transmission scheme of a transmitter according to a channel state in a receiver in a communication system. The method comprises the steps of: receiving a signal from a transmitter and detecting the channel state by estimating the channel state of the signal; selecting one of a plurality of transmission schemes available to the transmitter according to the channel state; and feeding back to the transmitter transmission scheme information indicating the selected transmission scheme.

According to a further aspect of the present invention, there is provided an apparatus for controlling a transmission scheme of a transmitter according to a channel state in a communication system. The apparatus comprises a data processor for processing data in a transmission scheme selected from among a plurality of transmission schemes; a radio frequency (RF) processor for transmitting the processed data to a receiver; and a controller for selecting a transmission scheme and, upon receiving from the receiver transmission scheme information indicating a transmission scheme determined according to the channel state between the transmitter and the receiver, selecting the transmission scheme in correspondence with the transmission scheme information.

According to still another aspect of the present invention, there is provided an apparatus for controlling a transmission scheme of a transmitter according to a channel state in a communication system. The apparatus comprises a data processor for processing data in a transmission scheme selected from among a plurality of transmission schemes; a radio frequency (RF) processor for transmitting the processed data to a receiver; and a controller for selecting a transmission scheme and, upon receiving from the receiver channel state information indicating the channel state between the transmitter and the receiver, selecting a transmission scheme in correspondence with the channel state information.

According to yet another aspect of the present invention, there is provided an apparatus for controlling a

transmission scheme of a transmitter according to a channel state in a communication system. The apparatus comprises a radio frequency (RF) processor for receiving a signal from a transmitter and detecting the channel state by estimating the channel of the signal; a data processor for selecting one of a plurality of transmission schemes available to the transmitter according to the channel state; and a feedback unit for feeding back to the transmitter transmission scheme information indicating the selected transmission scheme.

## BRIEF DESCRIPTION OF THE DRAWINGS

The above and other objects, features and advantages of the present invention will become more apparent from the following detailed description when taken in conjunction with the accompanying drawings in which:

FIG. 1 is a block diagram illustrating a structure of a transmitter and a receiver for implementing the present invention;
FIG. 2 is a block diagram illustratinga structure of data processors illustrated in FIG. 1;
FIG. 3 is a diagram illustrating a signal flow for an operation of the transmitter and the receiver according to an embodiment of the present invention;
FIG. 4 is a diagram illustrating a signal flow for an operation of the transmitter and the receiver according to another embodiment of the present invention;
FIG. 5 is a graph illustrating BER performance characteristics of a 4 $^{4\times2}$ communication system; and
FIG. 6 is a graph illustrating BER performance characteristics of a $^{4\times4}$ communication system.

## DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention provides a method for controlling a transmission scheme of a transmitter in a communication system where the transmitter has a plurality of transmit(Tx) antennas and a receiver has a plurality of Rx antennas. The transmission scheme controlling scheme will be described in the context of two communication systems based on the 4th generation (4G) communication systems. The 4G communication system used to describe the present invention comprises a transmitter with four transmission(Tx) antennas and a receiver with two reception(Rx) antennas, and a transmitter with four Tx antennas and a receiver with four Rx antennas. While the present invention is applicable to any communication system using a FDMA (Frequency Division Multiple Access) scheme, a TDMA (Time Division Multiple Access) scheme, a CDMA (Code Division Multiple Access) scheme, and an OFDM (Orthogonal Frequency Division Multiplexing) scheme , it is to be appreciated that the following description is made of acommunication system using the OFDM scheme(OFDM communication system), by way of example.

FIG. 1 is a block diagram illustrating a structure of a transmitter and a receiver for implementing the present invention.

Referring to FIG. 1, a transmitter 100 comprises a controller 111, a data processor 113, and an RF (Radio Frequency) processor 115. A receiver 150 comprises an RF processor 151, a data processor 153, and a feedback unit 155. Upon generation of transmission data, the data is provided to the data processor 113. The data processor 113 processes the data in an OFDM scheme under control of the controller 111. The controller 111 determines a transmission scheme to be used by the data processor 113 corresponding to transmission scheme control information fed back from the receiver 150. The RF processor 115, including a filter and a front end unit, processes the output of the data processor 113 into an RF signal that can be transmitted through an air and transmits the RF signal through Tx antennas.

Rx antennas of the receiver 150 receive the signal from the Tx antennas of the transmitter 100. The RF processor 151 down converts the received signal to an IF (Intermediate Frequency) signal. The data processor 153 processes the IF signal corresponding to the transmission scheme used by the transmitter 100 and outputs the processed signal as final received data. Meanwhile, the data processor 153 determines the transmission scheme control information by which the transmitter 100 will determine a transmission scheme, and transmits the transmission scheme control information to the transmitter 100 through the feedback unit 155. While the receiver 150 is provided with the feedback unit 155 for feeding back the transmission scheme control information, it is obvious that the transmission scheme control information can instead be transmitted by a higher-layer signaling message.

FIG. 2 is a block diagram illustrating a structure of the data processors 113 and 153. Referring to FIG. 2, the data processor 113 includes first, second and third transmission mode units 200, 230 and 260. The first transmission mode unit 200 processes data in a first transmission mode, a $^{4\times4}$ STBC scheme, the second transmission mode unit 230 processes data in a second transmission mode, a 2-layered SM(spatial multiplexing) scheme, and the third transmission mode unit 260 processes data in a third transmission mode, a SM scheme. The three modes are available to

a communication system where a transmitter has four Tx antennas and a receiver has four Rx antennas ( a $4\times4$ communication system). However, the third transmission mode would not be made available to a communication system where a transmitter has four Tx antennas and a receiver has two Rx antennas ( a $4\times2$ communication system) because fewer Rx antennas than Tx antennas are used.

The first transmission mode unit 200 has a modulator 201, a $4\times4$ STBC encoder 203, four IFFT (Inverse Fast Fourier Transform) units 207, 211, 215 and 219, and four parallel-to-serial converters (PSCs) 209, 213, 217 and 221.

Upon input of data to the first transmission mode unit 200, the data is provided to the modulator 201. The modulator 201 modulates the data in a predetermined modulation scheme. The $4\times4$ STBC encoder 203 encodes the modulated signal in $4\times4$ STBC scheme.

The IFFT units 207, 211, 215 and 219 IFFT-process the $4\times4$ STBC-coded signals. The PSCs 209, 213, 217 and 221 convert parallel IFFT signals received from the IFFT units 207, 211, 215 and 219 to serial signals, and output the serial signals through the corresponding Tx antennas connected to the RF processor 115. That is, the signal from the PSC 209 is transmitted through a first Tx antenna, the signal from the PSC 213 through a second Tx antenna, the signal from the PSC 217 through a third Tx antenna, and the signal from the PSC 221 through a fourth Tx antenna.

The second transmission mode unit 230 has a modulator 231, a serial-to-parallel converter (SPC) 233, two $2\times2$ STBC encoders 235 and 237, four IFFT units 239, 243, 247 and 251, and four PSCs 241, 245, 249 and 253.

Upon the input of data into the second transmission mode unit 230, the data is provided to the modulator 231. The modulator 231 modulates the data in a predeterminedmodulation scheme. The SPC 233 converts the serial modulated signal received from the modulator 231 into parallel signals. The $2\times2$ STBC encoders 235 and 237 encode the parallel signals in $2\times2$ STBC scheme.

The IFFT units 239, 243, 247 and 251 IFFT-process the $2\times2$ STBC-coded signals. The PSCs 241, 245, 249 and 253 convert parallel IFFT signals received from the IFFT units 239, 243, 247 and 251 to serial signals, and output the serial signals through the corresponding Tx antennas connected to the RF processor 115. That is, the signal from the PSC 241 is transmitted through the first Tx antenna, the signal from the PSC 245 through the second Tx antenna, the signal from the PSC 249 through the third Tx antenna, and the signal from the PSC 253 through the fourth Tx antenna.

The third transmission mode unit 260 has a modulator 261, an SPC 263, four IFFT units 265, 269, 273 and 277, and four PSCs 267, 271, 275 and 279.

Upon the input of data to the third transmission mode unit 260, the data is provided to the modulator 261. The modulator 261 modulates the data in a predeterminedmodulation scheme. The SPC 263 converts the serial modulated signal received from the modulator 261 to parallel signals. The IFFT units 265, 269, 273 and 277 IFFT-process the parallel signals, respectively. The PSCs 267, 271, 275 and 279 convert the parallel IFFT signals to serial signals, and output them through the corresponding Tx antennas connected to the RF processor 115. That is, the signal from the PSC 267 is transmitted through the first Tx antenna, the signal from the PSC 271 through the second Tx antenna, the signal from the PSC 275 through the third Tx antenna, and the signal from the PSC 279 through the fourth Tx antenna.

In the data processor 113, each of the three transmission mode units 200, 230, 260 has the four TX antennas, however it is obvious that the four TX antennas are utilized commonly by each of the three transmission mode units 200, 230, 260. Herein, in the case that the four TX antennas are utilized commonly by each of the three transmission mode units 200, 230, 260, the data processor 113 should have a selector(not shown) to select one of ouput signal among output signals of each of the three transmission mode units 200, 230, 260. So, the selected output signal is transmitted through the four TX antennas.

The signals transmitted through the four Tx antennas arrive at the data processor 153 through the RF processor 151 in the receiver 150.

As described above, the receiver 150 may be provided with two or four Rx antennas. In the former case, the transmitter 100 cannot transmit signals in the third transmission mode. The data processor 153 includes a plurality of SPCs 280 to 282, a plurality of FFT (Fast Fourier Transform) units 281 to 283, a space-time processor 284, a PSC 285, a channel estimator 286, a first transmission mode decider 287, a second transmission mode decider 288, and a transmission mode selector 289. Since the number of the Rx antennas is 2 or 4, as many SPCs and FFT units as the number of the Rx antennas are provided in the receiver 150.

The SPCs 280 to 282 convert serial signals received from the Rx antennas into parallel signals. The FFT units 281 to 283 FFT-process the parallel signals. The space-time processor 284 process the FFT signals corresponding to the transmission mode used in the transmitter 100. The PSC 285 converts the parallel signals received from the space-time processor 284 into a serial signal and outputs the serial signal as final data.

At the same time, the receiver 150 determines the best transmission mode scheme for itself. That is, the channel estimator 286 channel-estimates the received signals and outputs the channel estimation result to the first and second mode deciders 288. The first transmission mode decider 227 and 287 determines a transmission mode for the transmitter 100 in a first transmission mode decision scheme, and the second transmission mode decider 289 determines a transmission mode for the transmitter 100 in a second transmission mode decision scheme. The transmission mode selector 289 is switched to the first or second transmission mode deciders 287 or 288 and feeds back information related to the transmission mode decided by the first or second transmission mode deciders 287 or 288, that is, transmission mode control information, to the transmitter 100.

Now, data transmission and reception in each transmission mode will be described in detail.

Signal Transmission/Reception in the First Transmission Mode ( $4\times4$ STBC scheme)

The STBC is used to minimize the effects of multipath fading, while maintaining a minimum decoding complexity. Alamouti's code was designed for transmission guaranteeing orthogonality with a full-rate encoder and two Tx antennas. Since then, codes have emerged for orthogonal transmission at lower data rates with three or more Tx antennas. For details of the Alamouti's code, see Alamouti, "A Simple Transmit Diversity Technique for Wireless Communications", IEEE (Institute of Electrical and Electronics Engineers) JSAC, 1998. For details of the codes for three or more Tx antennas, see Tarokh, "Space-Time Codes for High Data Rate Wireless Communications: Performance Criterion and Code Construction", IEEE tr. Information Theory, 1998.

In the transmitter, an STBC is typically defined as Equation (1)

$$\begin{pmatrix} x_1 & x_2 \\ -x_2^* & x_1^* \end{pmatrix} \quad \ldots\ldots(1)$$

where the rows represent symbols transmitted in time and the columns represent symbols transmitted in Tx antennas (i.e. first and second Tx antennas). At time $t_1$, symbol $x_1$ is transmitted through the first Tx antenna, and symbol $x_2$ through the second Tx antenna.

Assuming that the channels between the Tx antennas experience flat fading, the receiver 150 receives the signals expressed as Equation (2).

$$\begin{bmatrix} r_1 \\ r_2 \end{bmatrix} = \begin{bmatrix} x_1 & x_2 \\ -x_2^* & x_1^* \end{bmatrix} \begin{bmatrix} h_1 \\ h_2 \end{bmatrix} + \begin{bmatrix} w_1 \\ w_2 \end{bmatrix} \quad \ldots\ldots(2)$$

where $w_i$ represents AWGN (Additive White Gaussian Noise) and $h_i$ represents the characteristic of an $i^{th}$ channel.

Equation (2) is equivalent to Equation (3).

$$\begin{bmatrix} r_1 \\ r_2^* \end{bmatrix} = \begin{bmatrix} h_1 & h_2 \\ h_2^* & -h_1^* \end{bmatrix} \begin{bmatrix} x_1 \\ x_2 \end{bmatrix} + \begin{bmatrix} w_1 \\ w_2 \end{bmatrix} \quad \ldots\ldots(3)$$

The vectors and matrices in Equation (3) are defined as Equation (4).

$$\mathbf{r} = \mathbf{Hx} + \mathbf{w}$$
$$\mathbf{r} = \begin{bmatrix} r_1 & r_2^* \end{bmatrix}^T, \mathbf{x} = \begin{bmatrix} x_1 & x_2 \end{bmatrix}^T, \mathbf{H} = \begin{bmatrix} h_1 & h_2 \\ h_2^* & -h_1^* \end{bmatrix} \quad \ldots\ldots(4)$$

Because

$$H^H H = \left(|h_1|^2 + |h_2|^2\right) I$$

in Equation (4), a transmission vector is derived from the received signals by Equation (5).

$$\hat{x} = \frac{1}{|h_1|^2 + |h_2|^2} H^H r \quad (5)$$

If the transmitter does not have knowledge of channel characteristics, Equation (5) represents the implementation of a maximum likelihood (ML) detector. Since the columns in Equation (4) are orthogonal with each other, the diversity order is 2. When the number of the Rx antennas is increased to R, the diversity order is 2R.

In a $T \times R$ communication system, a maximum diversity order is TR. Thus, the STBC scheme, in the first transmission mode, offers the maximum diversity order if the number of the Tx antennas is two. Studies have been conducted on achieving a maximum diversity order and it was proved that there is no orthogonal STBC scheme offering a maximum diversity order for three or more Tx antennas, if a modulated signal is a complex number signal. In this context, for four or more Tx antennas, an algorithm for generating a quasi-orthogonal STBC was proposed. The quasi-orthogonal STBC generation algorithm is disclosed in Jafarkhani, "A Quasi orthogonal Space-Time Block Code", IEEE tr. COM. 2001. Jafarkhani Discloses that for four Tx antennas and R Rx antennas, a diversity order of 2R is achieved and a 3[dB]-performance increase is observed compared to the Alamouti's orthogonal STBC.

Meanwhile, for four Tx antennas, a quasi-orthogonal STBC is an expansion of a 2x2 orthogonal STBC to Equation (6)

$$\mathbf{A}_{12} = \begin{bmatrix} x_1 & x_2 \\ -x_2^* & x_1^* \end{bmatrix}, \mathbf{A}_{34} = \begin{bmatrix} x_3 & x_4 \\ -x_4^* & x_3^* \end{bmatrix}$$

$$\mathbf{A}_{1\sim4} = \begin{bmatrix} \mathbf{A}_{12} & \mathbf{A}_{34} \\ -\mathbf{A}_{34}^* & \mathbf{A}_{12}^* \end{bmatrix} = \begin{bmatrix} x_1 & x_2 & x_3 & x_4 \\ -x_2^* & x_1^* & -x_4^* & x_3^* \\ -x_3^* & -x_4^* & x_1^* & x_2^* \\ x_4 & -x_3 & -x_2 & x_1 \end{bmatrix} \quad \ldots\ldots (6)$$

Let the column vectors in matrix $A_{1-4}$ be $[v_1\ v_2\ v_3\ v_4]$. Then, the column vectors are orthogonal as follows in Equation (7)

$$\langle v_1, v_2 \rangle = \langle v_1, v_3 \rangle = \langle v_2, v_4 \rangle = \langle v_3, v_4 \rangle = 0 \quad (7)$$

Therefore, an error matrix generated by matrix $A_{1-4}$ has a diversity order of 2R for a minimum rank of 2 and R Rx antennas. In this manner, for eight Tx antennas, a quasi-orthogonal STBC is produced by Equation (8)

$$\mathbf{A}_{1-4} = \begin{bmatrix} x_1 & x_2 & x_3 & x_4 \\ -x_2^* & x_1^* & -x_4^* & x_3^* \\ -x_3^* & -x_4^* & x_1^* & x_2^* \\ x_4 & -x_3 & -x_2 & x_1 \end{bmatrix}, \mathbf{A}_{5-8} = \begin{bmatrix} x_5 & x_6 & x_7 & x_8 \\ -x_6^* & x_5^* & -x_8^* & x_7^* \\ -x_7^* & -x_8^* & x_5^* & x_6^* \\ x_8 & -x_7 & -x_6 & x_5 \end{bmatrix}$$

$$\mathbf{A}_{1-8} = \begin{bmatrix} \mathbf{A}_{1-4} & \mathbf{A}_{5-8} \\ -\mathbf{A}_{5-8}^* & \mathbf{A}_{1-4}^* \end{bmatrix} \quad \ldots\ldots(8)$$

An error matrix generated by matrix $A_{1-8}$ also has a minimum rank of 2 as in the case of four Tx antennas. When such a quasi-orthogonal STBC as illustrated in Equation (8) is adopted and the data is modulated in a PSK (Phase Shift Keying) scheme, the received signals are expressed as Equation (9).

$$\begin{bmatrix} r_1 \\ r_2^* \\ r_3^* \\ r_4 \end{bmatrix} = \begin{bmatrix} h_1 & h_2 & h_3 & h_4 \\ h_2^* & -h_1^* & h_4^* & -h_3^* \\ h_3^* & h_4^* & -h_1^* & -h_2^* \\ h_4 & -h_3 & -h_2 & h_1 \end{bmatrix} \begin{bmatrix} x_1 \\ x_2 \\ x_3 \\ x_4 \end{bmatrix} + \begin{bmatrix} w_1 \\ w_2 \\ w_3 \\ w_4 \end{bmatrix} \quad \ldots\ldots(9)$$

which is defined as the vector matrix of Equation (10).

$$r=Hx+w \quad (10)$$

By multiplying both sides of Equation (10) by $H^H$ , expressed as Equation (11).

$$\mathbf{y} \equiv \mathbf{H}^H \mathbf{r} = \begin{bmatrix} c & 0 & 0 & a \\ 0 & c & b & 0 \\ 0 & b^* & c & 0 \\ a^* & 0 & 0 & c \end{bmatrix} \mathbf{x} + \mathbf{w}' \quad \ldots\ldots(11)$$

which is branched into two vector matrices as Equation (12) and Equation (13).

$$\begin{bmatrix} y_1 \\ y_4 \end{bmatrix} = \begin{bmatrix} c & a \\ a^* & c \end{bmatrix} \begin{bmatrix} x_1 \\ x_4 \end{bmatrix} + \mathbf{w}_1 \quad \text{.....(12)}$$

$$\begin{bmatrix} y_2 \\ y_3 \end{bmatrix} = \begin{bmatrix} c & b \\ b^* & c \end{bmatrix} \begin{bmatrix} x_2 \\ x_3 \end{bmatrix} + \mathbf{w}_2 \quad \text{.....(13)}$$

For computational simplicity, assuming that the received signals are recovered by multiplying both sides of each of Equation (12) and Equation (13) by an inverse matrix, a linear detector is implemented by Equation (14) and Equation (15)

$$\begin{bmatrix} \hat{x}_1 \\ \hat{x}_4 \end{bmatrix} = \begin{bmatrix} c & a \\ a^* & c \end{bmatrix}^{-1} \begin{bmatrix} y_1 \\ y_4 \end{bmatrix} \quad \text{.....(14)}$$

$$\begin{bmatrix} \hat{x}_2 \\ \hat{x}_3 \end{bmatrix} = \begin{bmatrix} c & b \\ b^* & c \end{bmatrix}^{-1} \begin{bmatrix} y_2 \\ y_3 \end{bmatrix} \quad \text{.....(15)}$$

<u>Signal Transmission/Reception in the Second Transmission Mode (2-Layered SM)</u>

Since each sub-channel experiences flat fading in the MIMO-OFDM system, a combination of spatial multiplexing and transmit diversity can be applied for modulation/demodulation of each sub-channel. For example, in the case of four Tx antennas and two or more Rx antennas as illustrated in FIG. 2, if the STBC coding is separately carried out for two pairs of Tx antennas, and different data $a_n$ and $b_n$ are independently transmitted through the two Tx antenna pairs, the data transmission through the Tx antennas at even-numbered and odd-numbered times after the STBC encoding is accomplished as illustrated in Table 1.

Table 1

| | Tx antenna 1 | Tx antenna 2 | Tx antenna 3 | Tx antenna 4 |
|---|---|---|---|---|
| t=2n | $a_{2n}$ | $a_{2n+1}$ | $b_{2n}$ | $b_{2n+1}$ |
| t=2n+1 | $-a^*_{2n+1}$ | $a^*_{2n}$ | $-b^*_{2n+1}$ | $b^*_{2n}$ |

For notational simplicity, an STBC matrix is applied for a $k^{th}$ sub-channel, as Equation (16).

$$A_n(k) = \begin{bmatrix} a_{2n}(k) & a_{2n+1}(k) & b_{2n}(k) & b_{2n+1}(k) \\ -a^*_{2n+1}(k) & a^*_{2n}(k) & -b^*_{2n+1}(k) & b^*_{2n}(k) \end{bmatrix} \quad \ldots\ldots(16)$$

Let a signal received on the k$^{th}$ sub-channel through an i$^{th}$ Rx antenna at time n be denoted by $y_n(i{:}k)$. Then, signals received through the two Rx antennas are represented in the form of a vector matrix as Equation (17).

$$\begin{bmatrix} y_{2n}(1;k) \\ y^*_{2n+1}(1;k) \\ y_{2n}(2;k) \\ y^*_{2n+1}(2;k) \end{bmatrix} = \begin{bmatrix} H_{11}(k) & H_{12}(k) & H_{13}(k) & H_{14}(k) \\ H^*_{12}(k) & -H^*_{11}(k) & H^*_{14}(k) & -H^*_{13}(k) \\ H_{21}(k) & H_{22}(k) & H_{23}(k) & H_{24}(k) \\ H^*_{22}(k) & -H^*_{21}(k) & H^*_{24}(k) & -H^*_{23}(k) \end{bmatrix} \begin{bmatrix} a_{2n}(k) \\ a_{2n+1}(k) \\ b_{2n}(k) \\ b_{2n+1}(k) \end{bmatrix} + \mathbf{w}(k) \quad \ldots\ldots(17)$$

where $H_{i,j}(k)$ is the channel gain of the k$^{th}$ sub-channel between a j$^{th}$ Tx antenna and the i$^{th}$ Rx antenna, and w (k) is the AWGN vector of the k$^{th}$ sub-channel. The vectors and matrices of Equation (17) are simplified to Equation (18)

$$y_n(k) = H(k)x_n(k) + w(k) \quad (18)$$

Since two pairs of $a_n$ and $b_n$ are added in $y_n(k)$ of Equation (18), it is efficient to detect the two values at a time by use of a Vertical - Belllab Layered Space Time(V-BLAST) receiver. Tap weight vectors for the V-BLAST detection are calculated in the following manner.

(1) Zero-Forcing

In terms of zero forcing, the tap weight vectors are computed by Equation (19).

$$G(k) \equiv [g_1(k) \cdots g_4(k)] = \{H^H(k)H(k)\}^{-1} H^H(k) \quad (19)$$

The first layer to be decoded in Equation (19) is given by Equation (20)

$$l = \arg\min_l \{d_1, d_2\}$$

$$d_1 = c(1) + c(3),\ d_2 = c(2) + c(4)$$
$$\text{s.t. where } \mathbf{c} = diag\{\mathbf{H}^H(k)\mathbf{H}(k)\}^{-1} \quad \ldots\ldots(20)$$

(2) MMSE (Minimum Mean Square Error)

In terms of MMSE, the tap weight vectors are given by Equation (21).

$$G(k) \equiv [g_1(k) \cdots g_4(k)] = \{H^H(k)H(k)+\sigma^2 I\}^{-1} H^H(k) \quad (21)$$

where $\sigma^2$ is a noise variance. The first layer to be decoded in Equation (21) is expressed as Equation (22)

$$l = \arg\min_{l}\{d_1, d_2\}$$

$$\text{s. t.} \quad d_1 = c(1)+c(3),\ d_2 = c(2)+c(4) \quad \text{where } \mathbf{c} = diag\{\mathbf{H}^H(k)\mathbf{H}(k)+\sigma^2\mathbf{I}\}^{-1} \quad \text{.....(22)}$$

If $a_{2n}(k)$ and $a_{2n+1}(k)$ are selected as the first elements to be decoded, the following decision is made as expressed in Equation (22).

$$\begin{bmatrix} \hat{a}_{2n}(k) \\ \hat{a}_{2n+1}(k) \end{bmatrix} \doteq \begin{bmatrix} \mathbf{g}_1^H(k) \\ \mathbf{g}_2^H(k) \end{bmatrix} \mathbf{y}_n(k) \quad \text{.....(23)}$$

Using the detected $\hat{a}_{2n}(k)$ and $\hat{a}_{2n+1}(k)$, the interference is cancelled by Equation (24).

$$\mathbf{y}_n^{'}(k) = \mathbf{y}_n(k) - [\mathbf{h}_1(k) \quad \mathbf{h}_2(k)] \begin{bmatrix} \hat{a}_{2n}(k) \\ \hat{a}_{2n+1}(k) \end{bmatrix}$$

$$\mathbf{H}^{'}(k) = [\mathbf{h}_3(k) \quad \mathbf{h}_4(k)] \quad \text{.....(24)}$$

If $H(k)=[h_1(k)h_2(k)h_3(k)h_4(k)]$ in Equation (24) and $a_{2n}(k)$ and $a_{2n+1}(k)$ are accurately recovered, Equation (14) is reduced to Equation (25).

$$\mathbf{y}_n^{'}(k) = \mathbf{H}^{'}(k) \begin{bmatrix} b_{2n}(k) \\ b_{2n+1}(k) \end{bmatrix} + \mathbf{w}(k) \quad \text{.....(25)}$$

Meanwhile, in view of the nature of the STBC, H(K) satisfies Equation (26).

$$\{H'(k)\}^H H(k) = \frac{1}{|H_{13}(k)|^2 + |H_{14}(k)|^2 + |H_{23}(k)|^2 + |H_{24}(k)|^2} I \quad (26)$$

Hence, $\boldsymbol{b_{2n}(k)}$ and $\boldsymbol{b_{2n+1}(k)}$ are simply recovered by linear computation as Equation (27).

$$\begin{bmatrix} \hat{b}_{2n}(k) \\ \hat{b}_{2n+1}(k) \end{bmatrix} = \frac{1}{c}\{\mathbf{H}'(k)\}^H \mathbf{y}'_n(k) \quad \ldots\ldots (27)$$

where $\boldsymbol{c=|H_{13}(k)|^2 +|H_{14}(k)|^2 + |H_{23}(k)|^2 +|H_{24}(k)|^2}$. The data recovery operation using Equation (21) to Equation (27) can be expanded to the case of two or more Rx antennas, as described earlier.

Signal Transmission/Reception in the Third Transmission Mode (SM)

To use the SM scheme in a typical MIMO communication system, as illustrated in FIG. 2, the transmitter transmits different data streams $\{x_1(n), ..., x_T(n)\}$ through the Tx antennas by multiplexing, and the receiver recovers the data streams using signals $\{y_1(n), ..., y_R(n)\}$ received through Rx antennas. The data rate is T times as high as that in the SISO scheme.

Assuming that all channels between the antennas experience flat fading, the channel between an $i^{th}$ Tx antenna and a $j^{th}$ Rx antenna is denoted by $h_{ij}$. Then, a signal model between the transmitted signal and the received signal is expressed as Equation (28).

$$y(n) = Hx(n) + w(n) \quad (28)$$

where $\boldsymbol{y(n)=\lfloor y_1(n)... y_R(n)\rfloor^T}$, $\boldsymbol{x(n)=\lfloor x_1(n)...x_T(n)\rfloor^T}$, w(n) is an $R\times1$ noise vector, and an $R\times T$ matrix $\boldsymbol{H = \lfloor h_{ij}\rfloor}$, $\boldsymbol{i = 1, ..., R, j =1, ..., T}$.

From the MIMO channel capacity formula, the channel capacity is derived by Equation (29).

$$C = \log_2[\det\{\frac{\rho}{N} HH^H + I_R\}] \quad (29)$$

where ρ is the SNR (Signal to Noise Ratio) of each Rx antenna at the receiver, and $I_R$ is an $R\times R$ identity matrix.

It is noted from Equation (29) that if H has a full rank, its column vectors have low correlations, and thus the eigenvalue of an $HH^H$ matrix is not spread too much, and the capacity of a MIMO channel is increased. Therefore, the channel capacity for T Tx antennas and one Rx antenna is expressed as Equation (30).

$$C = \log_2[\frac{\rho}{T}\sum_{i=1}^{T}|h_{1i}|^2 + 1] \quad \ldots\ldots (30)$$

For one Tx antenna and R Rx antennas, the channel capacity is computed by Equation (31).

$$C = \log_2[\rho \sum_{i=1}^{R} | h_{i1} |^2 + 1] \quad \ldots\ldots (31)$$

A comparison among Equation (29) to Equation (31) reveals that if both of the Tx antennas and the Rx antennas increase linearly in number, the channel capacity also increases linearly, and if either the number of Tx or Rx antennas increases, it produces a log-proportional increase in the channel capacity. In theory, the concurrent increase of the Tx and Rx antennas increases the channel capacity most efficiently. In real implementation, however, although it is relatively easy to install a plurality of Tx antennas in a base station, the number of Rx antennas available to a subscriber terminal is limited because of limits on terminal size, power, and mobility. Therefore, a modulation/demodulation scheme is to be explored, which allows effective utilization of increased the capacity in both cases where the numbers of both the Tx and Rx antennas can increase and where the number of either of the Tx or Rx antennas can also increase.

Signal detection in the SM mode will be described below.

Upon receipt of a signal vector y(n) of Equation (28), parallel transmitted data x(n) must be recovered from y (n). Even if the characteristic of each channel $h_{ij}$ is independent, the received signal experiences ISI (Inter-Symbol Interference) due to the concurrent transmission of data from the transmitter, and is added with AWGN, w(n). Recovery of x(n) from y(n) can be considered in three ways.

(1) ML Detection

Given x(n), the PDF (Probability Density Function) of y(n) is expressed as Equation (32).

$$f(y(n)|\, x(n)) = \frac{1}{(\pi\sigma^2)^M} \cdot \exp[-\frac{1}{\sigma^2}(y(n) - Hx(n))^H (y(n) - Hx(n))] \quad (32)$$

where $\sigma^2 = E[|w_i(n)|^2]$.

For computational simplicity, a log-likelihood function is taken and constants are neglected. Then, the function of detecting a transmitted signal that has a maximum probability in the PDF is expressed as Equation (33).

$$\hat{\mathbf{x}}(n) = \min_{\mathbf{x}_i(n)} \{\mathbf{y}(n) - \mathbf{H}\mathbf{x}(n)\}^H \{\mathbf{y}(n) - \mathbf{H}\mathbf{x}(n)\}$$

$$\text{s.t. } \mathbf{x}_i(n) \in \text{all possible constellation set} \quad \ldots\ldots (33)$$

In the case of ML-based detection of x(n) as in Equation (33), assuming a modulation scheme using L constellations, a transmitted signal resulting in a minimum target value is detected by computing Equation (33) $L^T$ times in total.

In theory, the ML detection scheme offers the best performance when the transmitter has no knowledge of the channels and the probability of transmitting $\{x_i(n)\}$ is equal over every i. However, since the real implementation of the ML detection scheme requires $L^T$ computations of Equation (33), a modulation scheme with a large number (L) of constellations is used to increase the data rate. If the number (T) of Tx antennas is large, in practice it is impossible to carry out the ML detection. For example, for 16QAM (Quadrature Amplitude Modulation) scheme and four Tx antennas, 65536 target value computations are required, thereby causing enormous load.

Therefore, the ML detection is used to indicate the lowest limit of the performance that can be achieved in a MIMO environment. In the real implementation, the use of a receiver structure that facilitates computations is considered at the expense of some of the performance of the ML detection.

(2) Linear Detection (R≥T)

For linear detection of x(n) illustrated in Equation (28), an objective equation is defined as Equation (34).

$$J = \{y(n)-H\hat{x}(n)\}^H \{y(n)-H\hat{x}(n)\} \quad (34)$$

where, $\hat{x}(n)$ that minimizes the objective equation is detected by Equation (35).

$$\frac{\partial J}{\partial x^*(n)} = -H^H\{(y(n) - H\hat{x}(n)\} = 0$$

$$\hat{x}(n) = (H^H H)^{-1} H^H y(n) \quad (35)$$

Since x(n) is to be included in the constellation set of the used modulation scheme, a final decision is made on $\hat{x}(n)$, taking the modulation scheme into account. Herein, the x(n) is expressed as Equation (36).

$$\hat{x}(n) = \mathit{decision}\ \{(H^H H)^{-1} H^H y(n)\} \quad (36)$$

A detector that implements Equation (36) detects a transmitted signal taking only the MIMO channel, H into account with no regard to the noise variance. This type of detector is called a zero-forcing linear detector. The zero-forcing linear detector is unbiased and calculates an MSE (Mean Square Error) by Equation (37).

$$\mathbf{E}[\hat{\mathbf{x}}(n)] = E[(\mathbf{H}^H\mathbf{H})^{-1}\mathbf{H}^H\{\mathbf{H}\mathbf{x}(n)+\mathbf{w}(n)\}] = \mathbf{x}(n)$$

$$MSE = E[\{\hat{\mathbf{x}}(n)-\mathbf{x}(n)\}^H\{\hat{\mathbf{x}}(n)-\mathbf{x}(n)\}]$$
$$= \sigma^2 \cdot tr[(\mathbf{H}^H\mathbf{H})^{-1}] \quad \ldots\ldots (37)$$

where tr[] represents an operation of computing the trace of a matrix.
Another type of linear detector can be contemplated, which operates by Equation (38).

$$z(n) = W_f y(n)$$

$$\hat{x}(n) = \mathit{decision}\{z(n)\}$$

$$J = E[\{z(n) - x(n)\}^H \{z(n) - x(n)\}]$$

$W_f$ that minimizes the above objective equation is expressed as Equation (39)

$$\frac{\partial J}{\partial W^*_f} = E[\{W_f y(n) - x(n)\} y^H(n)] = 0$$

$$W_f = H^H(HH^H + \sigma^2 I_M)^{-1} = (H^H H + \sigma^2 I_N)^{-1} H^H \quad (39)$$

The detector that implements Equation (39) is an MMSE linear detector. The MMSE linear detection requires

knowledge of the noise power or the estimation of the noise power from a received signal. With accurate knowledge of the noise power, the MMSE detector can better perform than the zero-forcing detector. Yet, if the eigenvalue spread of the $H^H H$ matrix is wide, the noise enhancement seriously degrades performance during detection because the MMSE linear detector inversely filters a channel.

(3) V-BLAST Detection (R≥T)

To improve the performance of the linear detector, interference cancellation is involved in the signal detection by sequentially recovering signals received from a plurality of Tx antennas according to their strengths, removing a recovered signal from the received signals, and then recovering the next signal. This type of detector uses D-BLAST (Diagonal BLAST) or V-BLAST depending on the type of a transmitted signal. V-BLAST, which is relatively easy to implement, is described herein.

V-BLAST detection is performed in the following procedure:

Step 1 : Compute the tap weight matrix W
where $\mathbf{W} = [\mathbf{w}_1 \cdots \mathbf{w}_T]$
Step 2 : Find the layer with maximum SNR
Let $k$ - th layer be chosen
Step 3 : Detection

$$z_k(n) = \mathrm{w}_k^H \, \mathrm{y}(n)$$

$$\hat{\mathrm{x}}_k(n) = decision\{z_k(n)\}$$

Step 4 : Interference cancellation

$$\mathrm{y}(n) = \mathrm{y}(n) - \mathrm{h}_k \hat{\mathrm{x}}_k(n)$$

$$\mathrm{H} = [\mathrm{h}_1 \cdots \mathrm{h}_{k-1} \; \mathrm{h}_{k+1} \cdots \mathrm{h}_T]$$

Step 5: Repeat Step 1 until all $x_i(n)$ is detected.

In terms of zero forcing, the tap weight matrix W is expressed as Equation (40).

$$\mathrm{W} = (\mathrm{H}^H \mathrm{H})^{-1} \mathrm{H}^H \quad (40)$$

and in terms of MMSE (only if noise power is known), it is expressed as Equation (41).

$$\mathrm{W} = (\mathrm{H}^H \mathrm{H} + \sigma^2 \mathrm{I})^{-1} \mathrm{H}^H \quad (41)$$

If every detection is accurate, the V-BLAST detector increases a data rate by T times and achieves on an average a diversity of $^{T \cdot R/2}$. Yet, for V-BLAST detection, the inverse matrices of a $^{T \times T}$ matrix, a $^{(T-1) \times (T-1)}$ matrix, and a 1x1 matrix are sequentially calculated, while being arranged in an order of size. To simplify the computation, a method combining QP (QuickProp) decomposition and sequential arrangement was proposed. When T=R, approximately

$$O\left(\frac{29}{3} T^3\right)$$

complex multiplications are required, which implies that the V-BLAST detector is more simple than the ML detector

but much more complex than the linear detector.

Transmission/reception in the first through third transmission modes have been described above. Now, a description will be made of an operation in the receiver for selecting a transmission mode for the transmitter.

As described earlier with reference to FIG. 2, the transmitter decides a transmission mode based on transmission mode control information received from the receiver. Thus, the receiver must feed back the transmission mode control information. The transmission mode can be determined by the first or second transmission mode decision method.

The first transmission mode decision method is based on Euclidean distance. A Euclidean distance is measured for each transmission mode and a transmission mode having the longest Euclidean distance is determined.

The Euclidean distance at each transmission mode is given as

$$d^2 = \frac{12}{2^R - 1}$$

for $2^R$-QAM scheme. It is normalized per unit energy. The normalization per unit energy means that the transmit power is unchanged even if 4QAM scheme is increased to 16QAM scheme. To use the same energy irrespective of 4QAM scheme or 16QAM scheme, every 1/4 of the total energy is assigned in 4QAM scheme, whereas every 1/16 of the total energy is assigned in 16QAM scheme.

The case where the first transmission mode decision method is applied to the first transmission mode will be described.

For a frequency efficiency of 4bps/Hz in a $4\times2$ communication system, mode 1 (16QAM scheme) and mode 2 (4QAM scheme, i.e. QPSK scheme) are available. Under the same frequency efficiency, the two modes have the same data rate. Given the same data rate, it is preferable to use a mode that offers a better BER performance. The receiver calculates the Euclidean distance by Equation (42).

$$d^2_{\min, Mode1} \leq \frac{\|H\|_F^2}{N_T} d^2_{\min,\text{mode1}} \quad (42)$$

where $\|\boldsymbol{H}\|_F^2$ is the Frobenius norm of the channel matrix H, that is, the sum of the squares of the singular values of channels. The operation of deriving Equation (42) will not be detailed herein.

The case where the first transmission mode decision method is applied to the second transmission mode will be described.

In the second transmission mode, the Euclidean distances differ in the $4\times2$ communication system and the $4\times4$ communication system. The Euclidean distance in the $4\times4$ communication system is calculated by Equation (43).

$$\left(\lambda_3^2(\mathbf{H}) + \lambda_4^2(\mathbf{H})\right)\frac{d^2_{\min,\text{mode2}}}{N_T} \leq d^2_{\min,Mode2}(\mathbf{H}) \leq \left(\lambda_1^2(\mathbf{H}) + \lambda_2^2(\mathbf{H})\right)\frac{d^2_{\min,\text{mode2}}}{N_T} \quad .....(43)$$

and in the 4x2 communication system, it is expressed as Equation (44).

$$\lambda_2^2(\text{H})\frac{d^2_{\min,\text{mode2}}}{N_T} \leq d^2_{\min,Mode2}(\text{H}) \leq \lambda_1^2(\text{H})\frac{d^2_{\min,\text{mode2}}}{N_T} \quad (44)$$

The case where the first transmission mode decision method is applied to the third transmission mode will be described.

The Euclidean distance is accurately calculated by Equation (45).

$$d^2_{\min,Mode3}(\mathbf{H}) := \min_{\mathbf{x}_i,\mathbf{x}_j \in \mathbf{X}_{Mode3}} \frac{\left\|\mathbf{H}\left(\mathbf{x}_i - \mathbf{x}_j\right)\right\|^2}{N_T} \quad \ldots\ldots(45)$$

and to reduce the complexity, it can be expressed in the form of a range expressed in Equation (46).

$$\lambda^2_{\min}(H)\,\frac{d^2_{\min,\mathrm{mode3}}}{N_T} \le d^2_{\min,Mode3}(H) \le \lambda^2_{\max}(H)\,\frac{d^2_{\min,\mathrm{mode3}}}{N_T} \quad (46)$$

where $\lambda_{min}$ is a minimum singular value and $\lambda_{max}$ is a maximum singular value. The eigenvalue of a channel indicates the state of the channel. If the eigenvalue is large, the channel state is good. If the eigenvalue is small, the channel state is bad.

Therefore, the receiver selects a transmission mode having the longest of the Euclidean distances measured for the transmission modes, and feeds back to the transmitter transmission mode control information related to the selected transmission mode.

The second transmission mode decision method is based on statistical values. When a transmission mode is decided using the Euclidean distance in the first transmission mode decision method, an antenna combination can be varied for each frame. On the other hand, in the second transmission mode decision method, mode switching is performed either once or twice based on an existing performance value. That is, a first mode is used below a threshold and a second mode is used at or above the threshold. The threshold is derived from a BER-SNR (Bit Error Rate-Signal-to-Noise Ratio) performance curve in a channel coding system, whereas it is derived from an FER (Frame Error Rate) -SNR performance curve in a non-channel coding system. The threshold can be determined in many ways. It can be determined by a BER/FER-SNR performance analysis based on an accumulated measurement under a particular environment, or by a simulation. A different performance curve is drawn in each mode mainly for the reason that a different modulation scheme is used with the same frequency efficiency. For example, mode 1 uses 256QAM scheme, mode 2 uses 16QAM scheme and mode 3 uses 4QAM scheme in the $4 \times 4$ communication system. Thus, the system stores the preliminarily calculated threshold, measures the SNR, and compares them. The threshold is set using the previous statistical values. That is, after the separate mode operations, the intersection among the performance curves of the modes is taken as the threshold. That is,

if SNR < Th0
operate the Mode X
else
operate the Mode Y

FIG. 3 is a diagram illustrating a signal flow for the operations of the transmitter and the receiver according to the embodiment of the present invention.

Referring to FIG 3, the transmitter transmits a signal in an initial setup mode, for example, the first transmission mode to the receiver in step 311. The receiver then channel-estimates the received signal in step 313, selects an intended transmission mode, for example the second transmission mode in the first or second transmission mode decision method according to the channel estimation result, in step 315, and feeds back transmission mode control information indicated the selected transmission mode to the transmitter in step 317.

The transmitter transits from the first transmission mode to the second transmission mode corresponding to the transmission mode control information in step 319 and transmits a signal in the second transmission mode to the receiver in step 321.

FIG. 4 is a diagram illustrating a signal flow for the operations of the transmitter and the receiver according to another embodiment of the present invention.

Referring to FIG. 4, the transmitter transmits a signal in an initial setup mode, for example, the first transmission mode to the receiver in step 411. The receiver then channel-estimates the received signal in step 413 and feeds back

channel information based on the channel estimation result to the transmitter in step 415.

The transmitter selects a transmission mode, for example, the second transmission mode in correspondence with the channel information in the first or second transmission mode decision method in step 419. The transmitter transits from the first transmission mode to the second transmission mode and transmits a signal in the second transmission mode to the receiver in step 421. As compared to the operation of the transmitter depicted in FIG. 3, the transmitter itself determines the transmission mode based on the feedback channel information rather than the receiver determining the transmission mode.

With reference to FIGs. 5 and 6, the BER performance of the present invention will be described.

For a simulation of the OFDM communication system, Rayleigh flat fading and the following parameters set forth in Table 2 are assumed.

Table 2

| Parameter | Value |
|---|---|
| Number of subcarriers | 64 |
| Number of cyclic prefix | 16 |
| Number of used subcarriers | 48 |
| Sample rate | 20Mbaud |
| Modulation | QPSK, 16QAM, 256QAM |
| Frame length | 24 symbols |
| Number of Tx antennas | 1, 2, 4 |
| Number of Rx antennas | 1, 2, 4 |
| Channel coding | None |

FIG. 5 is a graph illustrating the BER performance characteristics of the 4x2 communication system.

Referring to FIG. 5, a frequency efficiency of 4bps/Hz is set and four curves are independent curves of Mode 1 and Mode 2, a Euclidean distance-based switching curve, and a statistical value-based switching curve. The simulation result reveals that the Euclidean distance-based switching offers the best performance. The statistical value-based switching maintains the best performances of the independent mode operations in Mode 1 and Mode 2 and leads to a reduced number of switching occurrences.

FIG. 6 is a graph illustrating the BER performance characteristics of the 4x4 communication system.

Referring to FIG. 6, although the three modes are available, Mode 3(ML) is not available in the Euclidean distance-based switching because Mode 3(ML) always has a large value. Among all the modes, Mode 3(ML) has the best performance. Especially, the Euclidean distance-based switching is derived from the ML equation and thus it is not available in the 4x4 system. In an actual 4x4 system, suboptimal algorithms, MMSE and ZF(Zero Forcing) are used instead of ML which has a high complexity. Therefore, statistical value-based switching is based on Mode 3 using MMSE. Notably, Mode 1: 256QAM offers the worst performance, which implies that a modulation order will significantly affects an antenna structure.

In accordance with the present invention as described above, a transmission scheme is controlled according to channel state in a communication system, thereby maximizing system efficiency. Also, system complexity is minimized along with the adaptive control of the transmission scheme. Therefore, computation load-incurred system load is minimized.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for controlling a transmission scheme ofa transmitter according to a channel state in a communication system where the transmitter has M transmit antennas and a receiver has N receive antennas, comprising the steps of:

    processing data in a transmission scheme selected from among a plurality of transmission schemes, and

transmitting the processed data to the receiver by the transmitter;
receiving the data from the transmitter, estimating the channel state, selecting a transmission scheme according to the channel state corresponding to the channel state estimation result, and feeding back to the transmitter transmission scheme information indicating the selected transmission scheme by the receiver; and
determining the transmission scheme corresponding to the received transmission scheme information by the transmitter.

**2.** The method of claim 1, wherein the plurality of transmission schemes are space-time block coding scheme, layered spatial multiplexing scheme, and spatial multiplexing scheme.

**3.** The method of claim 1, wherein the transmission scheme selecting step comprises the step of selecting by the receiver one of the plurality of the transmission schemes according to a first transmission scheme deciding scheme which selects a transmission scheme having the longest Euclidean distance from among the plurality of the transmission schemes in the channel state.

**4.** The method of claim 1, wherein the transmission scheme selecting step comprises the step of selecting by the receiver one of the plurality of the transmission schemes according to a second transmission scheme deciding scheme selects one of the plurality of the transmission schemes using a threshold which is set according to one of a bit error rate (BER) with respect to a signal to noise ratio (SNR), and a frame error rate (FER) with respect to SNR in the channel state.

**5.** A method for controlling a transmission scheme of a a transmitter according to a channel state in a communication system where the transmitter has M transmit antennas and a receiver has N receive antennas, comprising the steps of:

processing data in a transmission scheme selected from among a plurality of transmission schemes, and transmitting the processed data to the receiver by the transmitter;
receiving the data from the transmitter, estimating the channel state , and feeding back to the transmitter channel state information corresponding to the channel state estimation resultby the receiver, and
selecting one of the plurality of the transmission schemes corresponding to the received channel state information by the transmitter.

**6.** The method of claim 5, wherein the plurality of the transmission schemes are space-time block coding scheme, layered spatial multiplexing scheme, and spatial multiplexing scheme.

**7.** The method of claim 5, wherein the transmission scheme selecting step comprises the step of selecting by the transmitter one of the plurality of the transmission schemes according to a first transmission scheme deciding scheme which selects a transmission scheme having the longest Euclidean distance from among the plurality of the transmission schemes in the estimated channel state represented by the channel state information.

**8.** The method of claim 5, wherein the transmission scheme selecting step comprises the step of selecting by the transmitter one of the plurality of the transmission schemes according to a second transmission scheme deciding scheme which selects one of the plurality of the transmission schemes using a threshold which is set according to one of a bit error rate (BER) with respect to a signal to noise ratio (SNR), or a frame error rate (FER) with respect to the SNR in the channel state.

**9.** An apparatus for controlling a transmission scheme of a transmitter according to a channel state in a communication system where the transmitter has M transmit antennas and a receiver has N receive antennas, comprising:

the transmitter for processing data in a transmission scheme selected from among a plurality of transmission schemes, transmitting the processed data to the receiver, and determining a transmission scheme corresponding to the transmission scheme information received from the receiver; and
the receiver for receiving the signal from the transmitter, estimating the channel of the signal, selecting a transmission scheme according to the estimated channel state corresponding to the channel state estimation result, and feeding back to the transmitter the transmission scheme information indicating the selected transmission scheme.

**10.** The apparatus of claim 9, wherein the plurality of the transmission schemes are space-time block coding scheme,

layered spatial multiplexing scheme, and spatial multiplexing scheme.

**11.** The apparatus of claim 9, wherein the receiver comprises:

a channel estimator for estimating the channel state of the received signal;
a transmission scheme decider for selecting one of the plurality of the transmission schemes according to the estimated channel state; and
a transmission scheme selector for feeding back the transmission scheme information indicating the selected transmission scheme.

**12.** The apparatus of claim 11, wherein the transmission scheme decider selects one of the plurality of the transmission schemes according to
a first transmission scheme deciding scheme which selects a transmission scheme having the longest Euclidean distance from among the plurality of the transmission schemes in the estimated channel state.

**13.** The apparatus of claim 11, wherein the transmission scheme decider selects one of the plurality of the transmission schemes according to a second transmission scheme deciding scheme which selects one of the plurality of the transmission schemes using a threshold which is set according to one of a bit error rate (BER) with respect to a signal to noise ratio (SNR), or a frame error rate (FER) with respect to the SNR in the estimated channel state.

**14.** An apparatus for controlling a transmission scheme of a transmitter according to a channel state in a communication system where the transmitter has M transmit antennas and a receiver has N receive antennas, comprising:

the transmitter for processing data a transmission scheme selected from among a plurality of transmission schemes, transmitting the processed data to a receiver, and selecting one of the plurality of transmission schemes corresponding to the channel state information received from the receiver; and
the receiver for receiving the data from the transmitter, estimating the channel state , and feeding back to the transmitter the channel state information corresponding to the channel state estimation result.

**15.** The apparatus of claim 14, wherein the plurality of the transmission schemes are space-time block coding scheme, layered spatial multiplexing scheme, and spatial multiplexing scheme.

**16.** The apparatus of claim 14, wherein the transmitter selects one of the plurality of the transmission schemes according to a first transmission scheme deciding scheme which selects a transmission scheme having the longest Euclidean distance from among the plurality of the transmission schemes in the channel state represented by the channel state information.

**17.** The apparatus of claim 14, wherein the transmitter selects one of the plurality of the transmission schemes according to a second transmission scheme deciding schemewhich selects one of the plurality of the transmission schemes using a threshold which is set according to one of a bit error rate (BER) with respect to signal to noise ratio (SNR), and a frame error rate (FER) with respect to the SNR in the channel state.

**18.** A method of controlling a transmission scheme of a transmitter according to a channel state in a transmitter in a communication system, comprising the steps of:

processing data in a transmission scheme selected from among a plurality of transmission schemes, and transmitting the processed data to a receiver;
receiving from the receiver transmission scheme information indicating a transmission scheme determined according to the channel state between the transmitter and the receiver; and
determining the transmission scheme corresponding to the received transmission scheme information.

**19.** A method of controlling a transmission scheme of a transmitter according to a channel state in a transmitter in a communication system, comprising the steps of:

processing data ina transmission scheme selected from among a plurality of transmission schemes, and transmitting the processed data to a receiver;
receiving from the receiver channel state information indicating the channel state between the transmitter and the receiver; and

determining a transmission scheme corresponding to the received channel state information.

**20.** A method of controlling a transmission scheme of a transmitter according to a channel state in a receiver in a communication system, comprising the steps of:

receiving a signal from a transmitter and detecting the channel state by estimating the channel state of the signal;
selecting one of a plurality of transmission schemes available to the transmitter according to the channel state; and
feeding back to the transmitter transmission scheme information indicating the selected transmission scheme.

**21.** An apparatus for controlling a transmission scheme of a transmitter according to a channel state in a communication system, comprising:

a data processor for processing data in a transmission scheme selected from among a plurality of transmission schemes;
a radio frequency (RF) processor for transmitting the processed data to a receiver; and
a controller for selecting a transmission scheme and, upon receiving from the receiver transmission scheme information indicating a transmission scheme determined according to the channel state between the transmitter and the receiver, selecting the transmission scheme in correspondence with the transmission scheme information.

**22.** An apparatus for controlling a transmission scheme of a transmitter according to a channel state in a communication system, comprising:

a data processor for processing data in a transmission scheme selected from among a plurality of transmission schemes;
a radio frequency (RF) processor for transmitting the processed data to a receiver; and
a controller for selecting a transmission scheme and, upon receiving from the receiver channel state information indicating the channel state between the transmitter and the receiver, selecting a transmission scheme in correspondence with the channel state information.

**23.** An apparatus for controlling a transmission scheme of a transmitter according to a channel state in a communication system, comprising:

a radio frequency (RF) processor for receiving a signal from a transmitter and detecting the channel state by estimating the channel of the signal;
a data processor for selecting one of a plurality of transmission schemes available to the transmitter according to the channel state; and
a feedback unit for feeding back to the transmitter transmission scheme information indicating the selected transmission scheme.

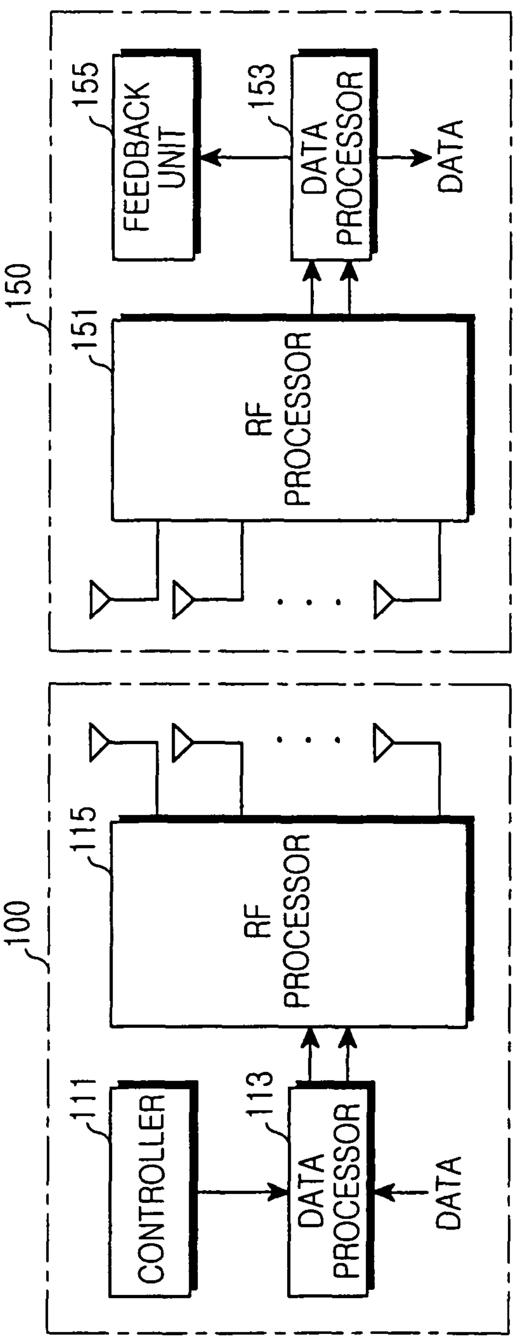
100
111
CONTROLLER
113
DATA PROCESSOR
DATA
115
RF PROCESSOR
150
151
RF PROCESSOR
153
DATA PROCESSOR
DATA
155
FEEDBACK UNIT

FIG.1

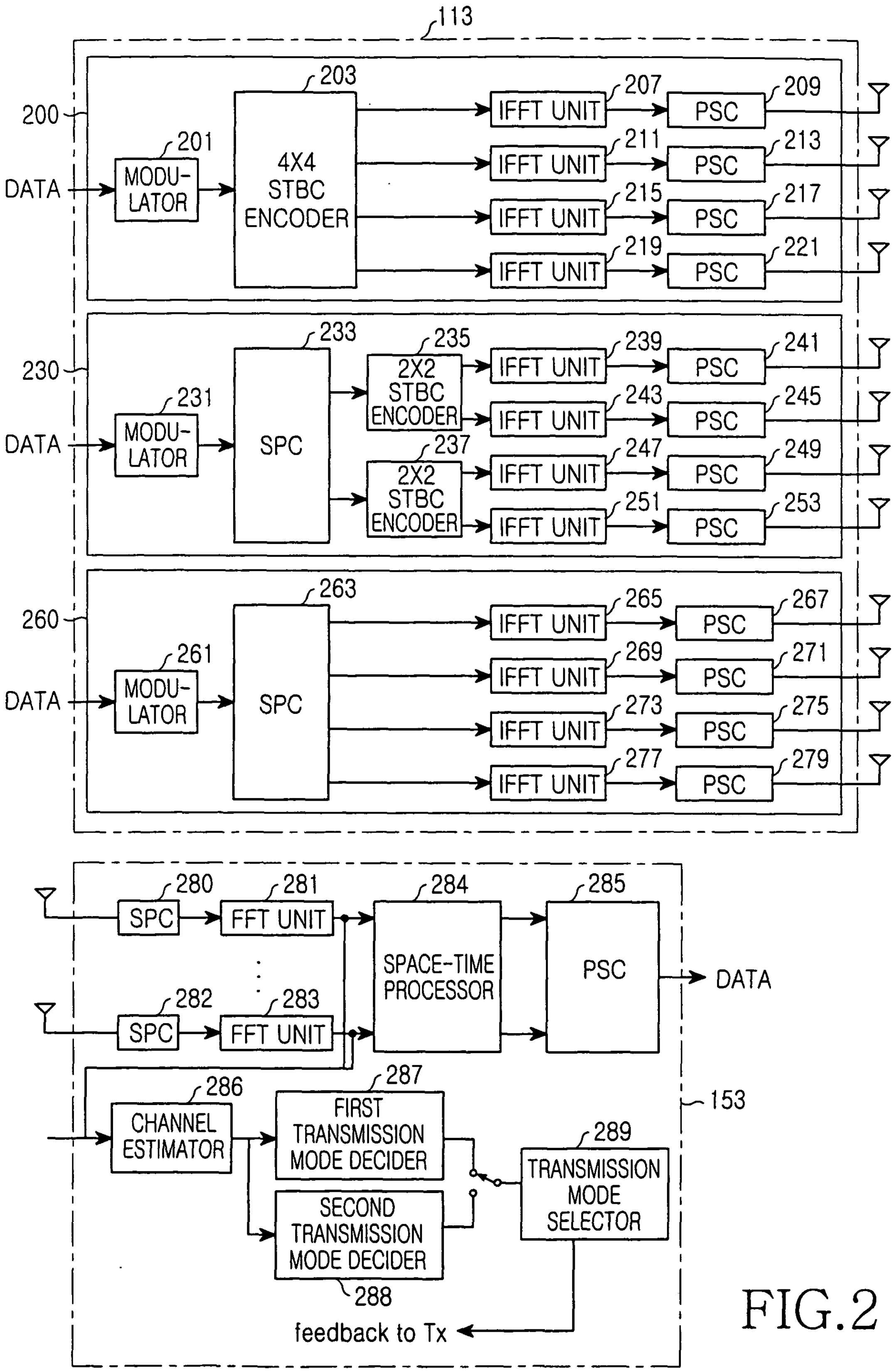
113
200
201
DATA
MODU-LATOR
203
4X4 STBC ENCODER
207
IFFT UNIT
209
PSC
211
IFFT UNIT
213
PSC
215
IFFT UNIT
217
PSC
219
IFFT UNIT
221
PSC
230
231
DATA
MODU-LATOR
233
SPC
235
2X2 STBC ENCODER
237
2X2 STBC ENCODER
239
IFFT UNIT
241
PSC
243
IFFT UNIT
245
PSC
247
IFFT UNIT
249
PSC
251
IFFT UNIT
253
PSC
260
261
DATA
MODU-LATOR
263
SPC
265
IFFT UNIT
267
PSC
269
IFFT UNIT
271
PSC
273
IFFT UNIT
275
PSC
277
IFFT UNIT
279
PSC
280
SPC
281
FFT UNIT
282
SPC
283
FFT UNIT
284
SPACE-TIME PROCESSOR
285
PSC
DATA
153
286
CHANNEL ESTIMATOR
287
FIRST TRANSMISSION MODE DECIDER
288
SECOND TRANSMISSION MODE DECIDER
289
TRANSMISSION MODE SELECTOR
feedback to Tx

FIG.2

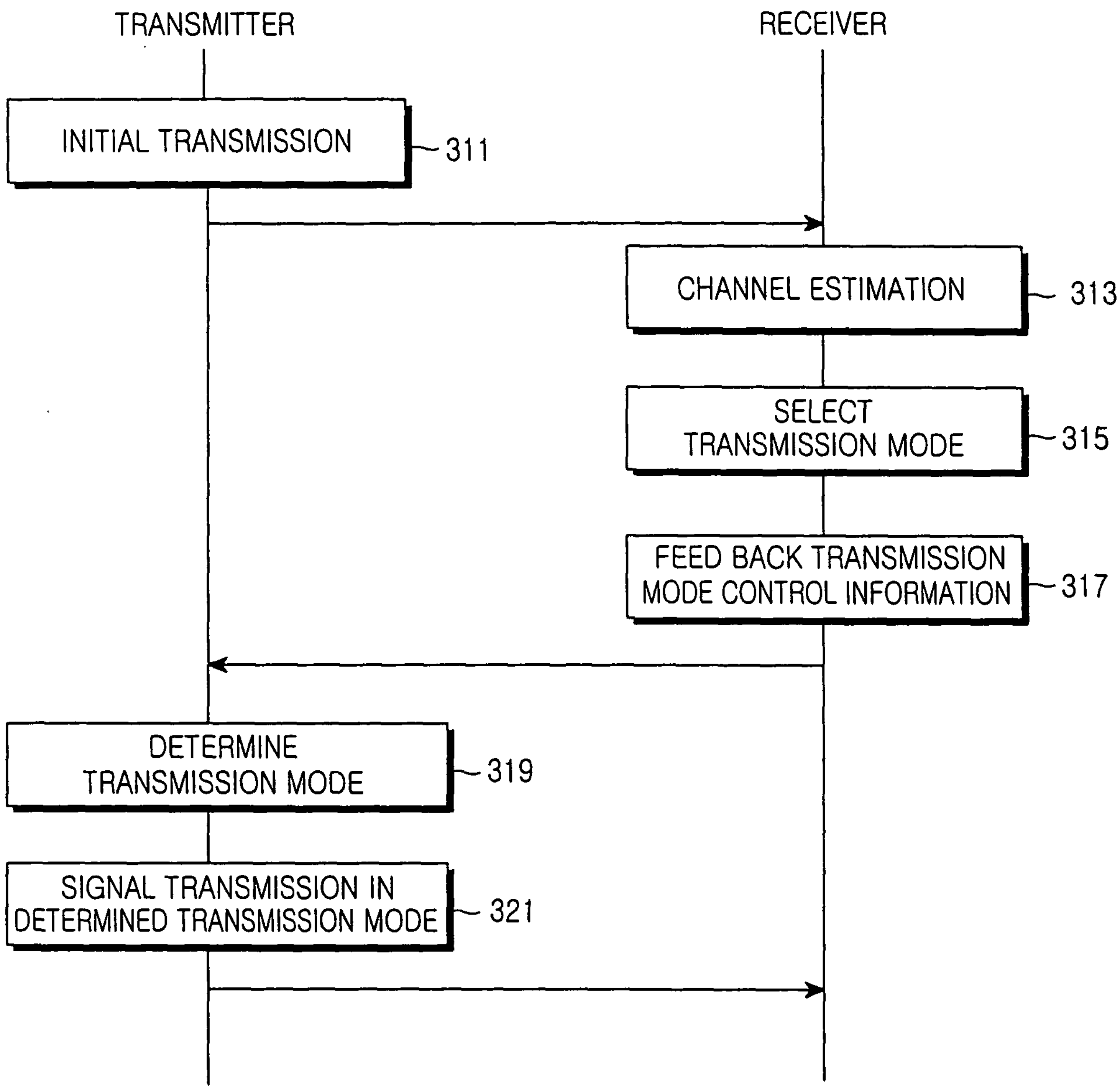
TRANSMITTER
RECEIVER
INITIAL TRANSMISSION
311
CHANNEL ESTIMATION
313
SELECT TRANSMISSION MODE
315
FEED BACK TRANSMISSION MODE CONTROL INFORMATION
317
DETERMINE TRANSMISSION MODE
319
SIGNAL TRANSMISSION IN DETERMINED TRANSMISSION MODE
321

FIG.3

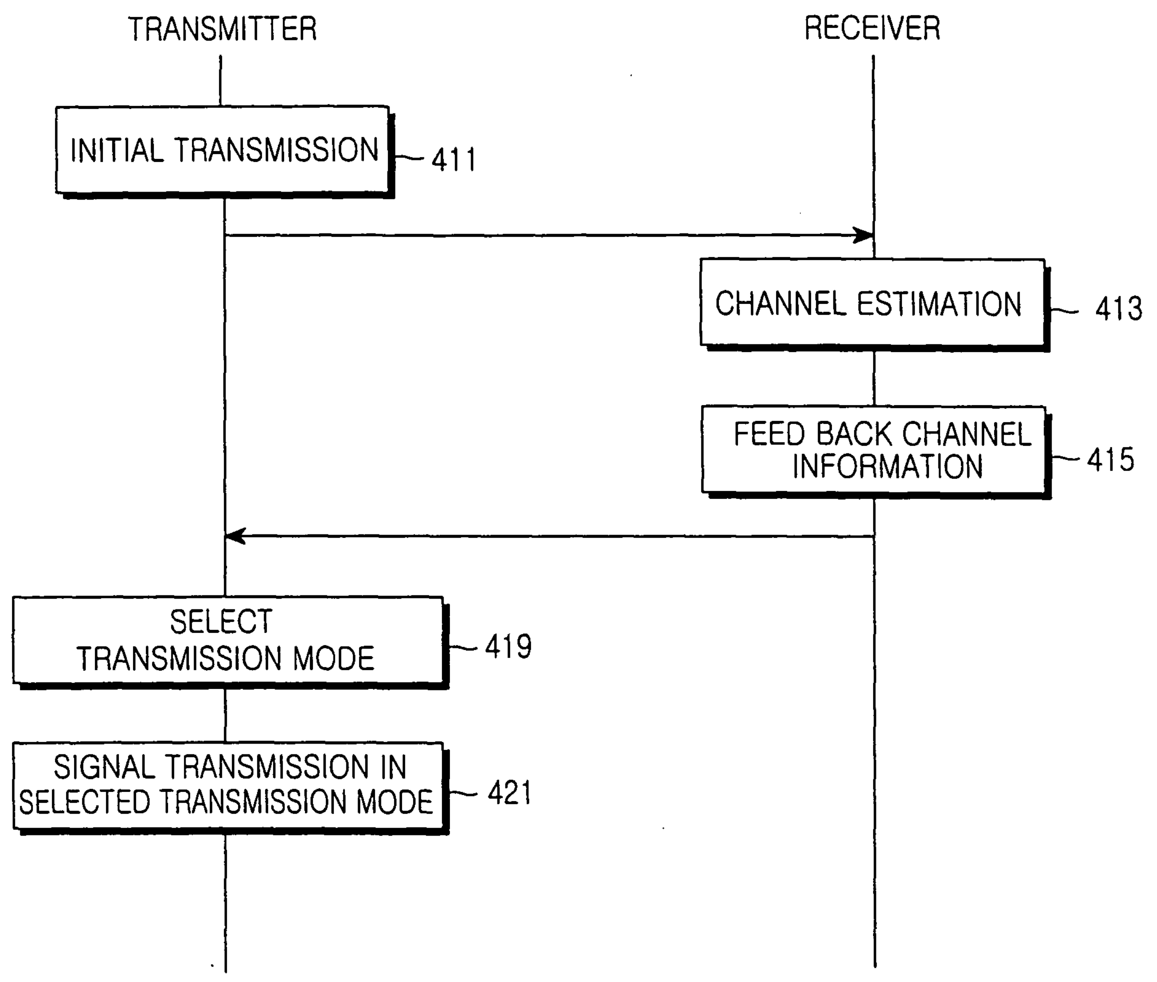
TRANSMITTER
RECEIVER
INITIAL TRANSMISSION
411
CHANNEL ESTIMATION
413
FEED BACK CHANNEL INFORMATION
415
SELECT TRANSMISSION MODE
419
SIGNAL TRANSMISSION IN SELECTED TRANSMISSION MODE
421

FIG.4

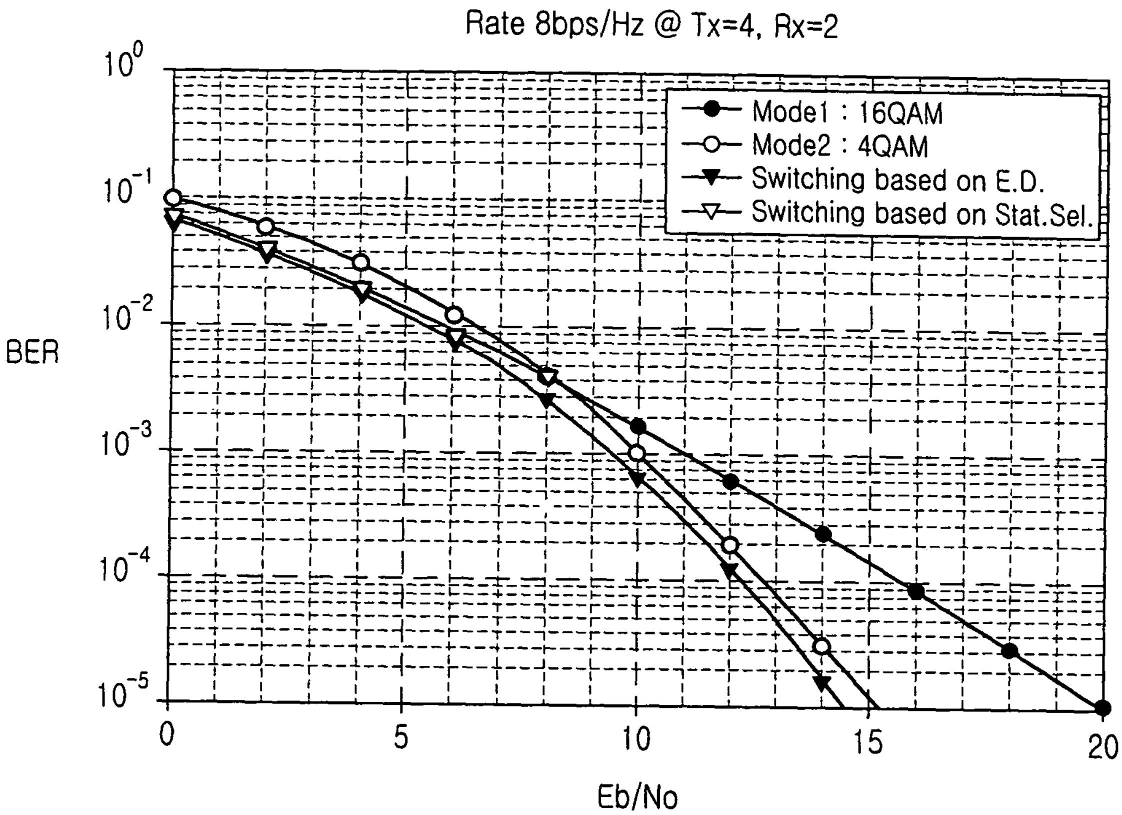

Rate 8bps/Hz @ Tx=4, Rx=2
BER
10^0
10^-1
10^-2
10^-3
10^-4
10^-5
0
5
10
15
20
Eb/No
Mode1 : 16QAM
Mode2 : 4QAM
Switching based on E.D.
Switching based on Stat.Sel.


FIG.5

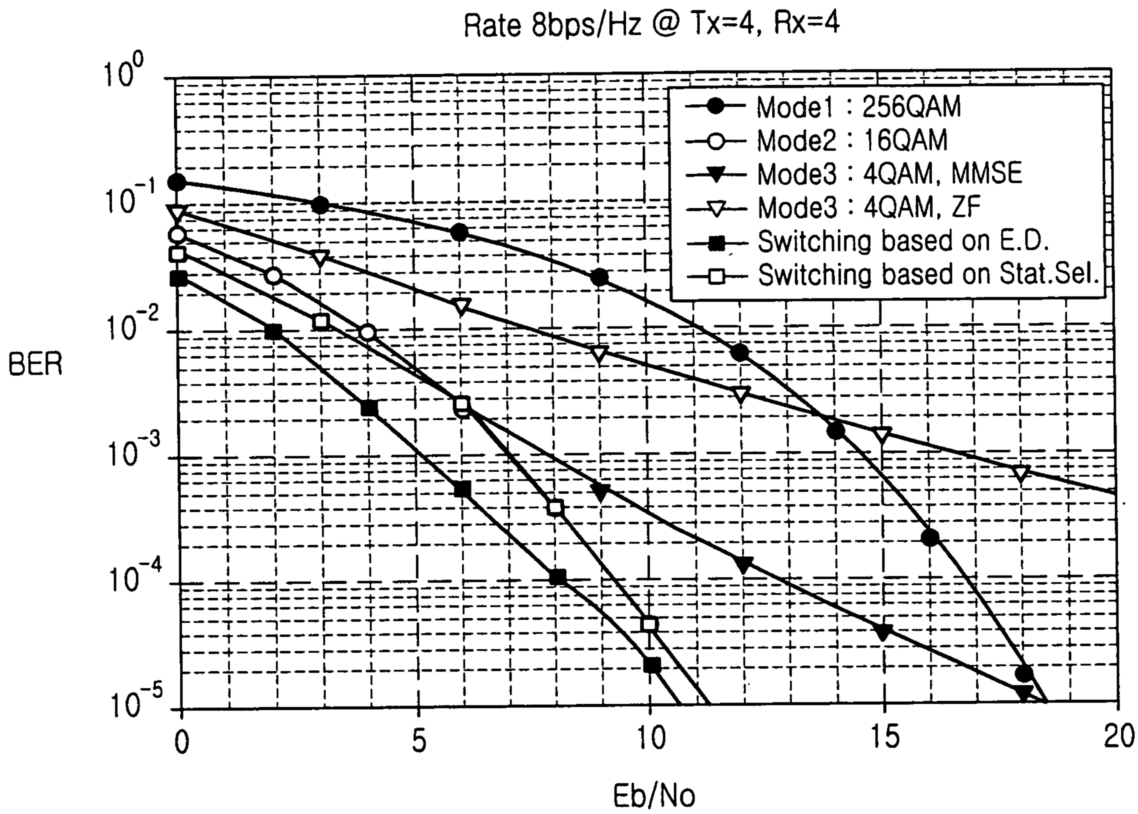
Rate 8bps/Hz @ Tx=4, Rx=4
$10^0$
$10^{-1}$
$10^{-2}$
$10^{-3}$
$10^{-4}$
$10^{-5}$
BER
0
5
10
15
20
Eb/No
Mode1 : 256QAM
Mode2 : 16QAM
Mode3 : 4QAM, MMSE
Mode3 : 4QAM, ZF
Switching based on E.D.
Switching based on Stat.Sel.

FIG.6